# EUROPEAN PATENT APPLICATION

(11) **EP 1 126 399 A2**
(43) Date of publication of application: **22.08.2001**
(21) Application number: 01400038.4
(22) Date of filing: 09.01.2001
(51) Int. Cl.: G06K 7/08

(54) **RF id tagging for improved tracking in a secure environment**

(30) Priority: 02.02.2000 US 496526
(71) Applicant: IOMEGA CORPORATION, Roy, UT 84067 (US)
(72) Inventor: Thomas, Fred C., III, Ogden, Utah 84403 (US)
(74) Representative: Cabinet Hirsch

(57) **Abstract**

An apparatus and method are provided for tracking objects in a secure environment. RF ID technology, including tag(s) and an antenna, is employed by placing the antenna in a strategic position within a secure environment, such as a safe. An RF ID tag has a memory and is positioned on an object to be tracked, such as a removable data storage medium, so that when the object is placed within the secure environment, its position or presence within the secure environment is determined via the antenna. Identification information stored in the memory of the RF ID tag may be unique so that the object may be uniquely identified by the antenna. Other identification information, such as information relating to a user, may also be included with the tracking information. A processor may be used to process the tracking information.

## Description

### Background of the Invention

### Field of the Invention:

The present invention relates generally to an information tracking method and apparatus for tracking information pertaining to an object or component of a system. More particularly, the present invention relates to an information tracking method and apparatus for tracking information pertaining to one or more of a plurality of objects or components in a secure environment.

### Brief Description of Prior Developments:

Keeping track of information relating to components, sub-components and other parts of a whole is desirable with respect to information processing systems, industrial manufacturing processes and other systems. Various types of information about a component or sub-component may or may not be important in terms of the overall system or process. Thus, information to be tracked may range widely, and could include one or more of positional information, relational information, temporal information, security clearance information, password information and the like. In short, 'important' information could include any information relating to the component, sub-component or part that may be useful in the context of characterizing, regulating or controlling a system or process.

As radio frequency identification (RF ID) technology has continued to develop, more and more applications have become suited to its use therein. RF ID technology uses radio waves (or other signals from a different frequency range, such as the microwave range) to transfer information from antennae to tags affixed to an item being tracked or from tags to antennae. An RF ID system consists of three primary components: a tag (also known as a transponder or data carrier, depending on individual manufacturer/user technology); an antenna (also known as a reader or read/write head); and a controller. The antenna and the controller can also be combined into one field-mountable unit, commonly referred to as a communicator. The use of RF ID technology is desirable with respect to a tracking system because of such characteristics as highly accurate data collection and transfer (even in environments having grease, dust, paint, and other harsh environmental elements), system flexibility and versatility, the ability to interface with other systems and the like. RF ID technology thus provides inherently reliable data transmission and is suitable to tracking information relating to interesting parts or aspects of a system or process.

Some prior art techniques for tracking items of interest in a secure environment have had difficulties associated therewith. For example, in the software industry, it is invariably desirable to keep track of removable storage media having confidential data or code within a secure environment. The purpose of such tracking, e.g., may be to control the location of a storage medium having proprietary data so that it is not lost or stolen from the enterprise owning the information. Generally speaking, techniques for keeping track of removable storage media have been overseen by security personnel. For example, in some instances, employees are required to place all confidential data on removable data storage media that are locked in a safe or other secure location at the end of the day. At the beginning of the following day, employees open the safe and work further with the storage medium. Sometimes this process takes place with various involvement from security personnel. With such a system, audits of the contents of the safe(s) can be performed to ensure compliance with requirements of the secure environment. When a medium is discovered missing, appropriate action can be taken against the employee responsible for the medium. However, such a system requires extra personnel performing extra duties, and generally involves paperwork and other transactional costs, e.g., when a medium is placed into or removed from a safe.

A firewall could also be instituted in connection with the computers from which confidential information was created, viewed or modified, thereby preventing any information from leaving a secure environment via a network, but this does not additionally prevent the physical movement of a removable storage medium having confidential data stored thereon.

Consequently, it would be of great advantage to provide a seamless solution for tracking objects in a secure environment without incurring transactional, temporal and/or personnel costs associated with prior art techniques. It would be of further advantage to employ RF ID technology in connection with solving the difficulties associated with prior art information tracking techniques.

### Summary of the Invention

The present invention relates to tracking objects in a secure environment. RF ID technology, including tag(s) and an antenna, is employed by placing the antenna in a strategic position within a secure environment, such as a safe. A tag has a memory and is positioned on an object to be tracked, such as a removable data storage medium, so that when the object is placed within the secure environment, its position or presence within the secure environment is determined via the antenna. Identification information stored in the memory of the RF ID tag may be unique such that the object becomes uniquely identifiable by the antenna. Other identification information, such as information relating to a user, may also be included with the tracking information. A processor may be used to process the tracking information.

### Detailed Description of the Drawings

The method and apparatus for tracking information relating to objects in a system are further described with reference to the accompanying drawings in which:
Fig. 1 represents a prototypical disk drive system in connection with which an exemplary embodiment of the present invention may be employed.
Fig. 2 is an illustration of a removable data storage medium in accordance with an exemplary embodiment of the present invention.
Figs. 3A and 3B are block diagrams of an RF ID tagging system utilized in accordance with the present invention.
Fig. 4 is an illustration of a removable data storage medium having a tag secured thereto in accordance with the present invention.
Fig. 5 is a block diagram of an exemplary embodiment for tracking information relating to tags secured to media within a secure environment in accordance with the present invention.
Fig. 6 is a block diagram of an alternative embodiment that utilizes a user identification device in accordance with the present invention.
Fig. 7 is a block diagram of an alternative embodiment wherein an antenna is transportable as a field unit in accordance with the present invention.

### Detailed Description of Preferred Embodiments

The present invention relates to tracking objects in a secure environment by utilizing RF ID technological apparatus and methods, including the use of RF ID tags and an antenna. The antenna is placed in a strategic position, such as the center of the secure environment or away from an interfering position, within a secure environment, such as a safe. The RF ID tag has a memory and is positioned on an object to be tracked, such as a removable data storage medium, so that when the object is placed within the secure environment, its position or presence within the secure environment is determined. Identification information stored in the memory of the RF ID tag may be unique so that the object may be uniquely identified by the antenna. Other identification information, such as information relating to a user, may also be included with the tracking information.

The present invention is described herein with reference to a disk drive system having a removable storage medium for remotely storing confidential or other proprietary data. The present invention should not be construed to be so limited and may also be used, for example, in connection with any system or process in which RF ID tagging technology may be used to track or take inventory of objects in a secure environment.

In an exemplary embodiment, the present invention is implemented in connection with a removable data storage medium readable/writable by a data storage device. Preferably, an RF ID tag is positioned on a medium so that when the medium is placed in a secure environment with an antenna, the presence of the medium is sensed and it is determined that the medium is present in the secure environment.

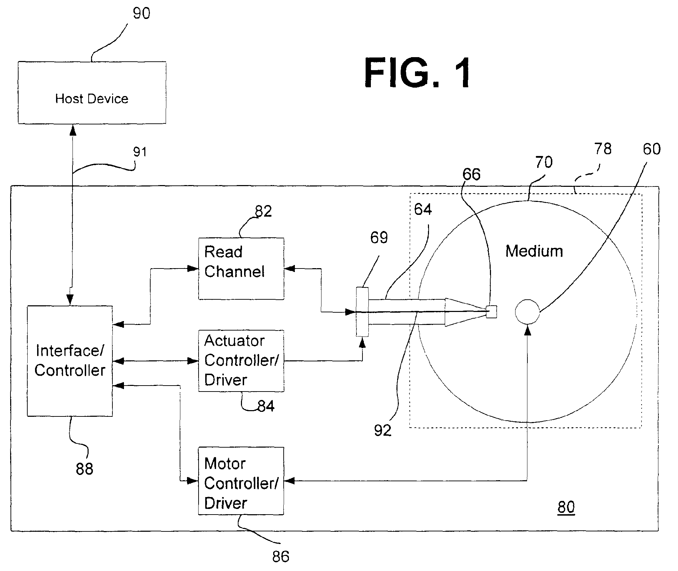

Figure 1 is a schematic diagram of an exemplary data storage device 80 for storing and retrieving information for a host device 90 wherein the present invention may be employed. Host device 90 may be one of a number of various types of computer based devices such as a personal computer, a handheld computer, or the like. Host device 90 communicates with device 80 via bus 91 by sending commands to write or read digital information to or from digital recording medium 70. Bus 91 may be any one of the various buses such as parallel, generic serial, USB, fire wire, SCSI, and so on.

Device 80 comprises a controller 88 that provides an interface with host device 90 and controls the overall operation of device 80. Controller 88 is preferably a microprocessor-based controller. Device 80 also comprises a read channel 82 for conditioning signals read from medium 70; actuator controller 84 for providing servo control and tracking; motor controller 86 for controlling the spin rate of medium 70 via a spindle motor 60, and an actuator assembly for reading the data from medium 70.

The actuator assembly comprises a read/write head 66 that is connected to a distal end of an actuator assembly. Read/write head 66 comprises a slider that carries a read/write element, either formed therein or attached thereto. The actuator assembly also comprises a suspension arm 64 and an actuator 69 that cooperate to move the slider 66 over the surface of medium 70 for reading and writing digital information. The read/write element of head 66 is electrically coupled to read channel 82 by way of electrical conductor 92.

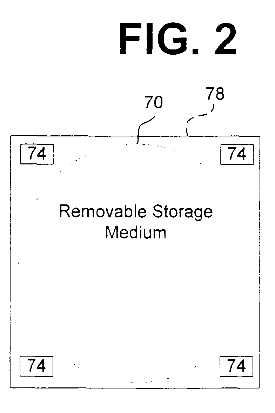

Digital recording medium 70 may be one of any of the various digital data storage media such as magnetic, optical, or magneto-optical. The present invention applies to when medium 70 is removable from device 80. As shown by Figure 2, when the medium 70 is removable from device 80, medium 70 may be encased in an outer shell 78 to protect medium 70 from damage. Additionally, portions 74 of outer shell 78 may be indentations, cavities, adhesive parts, molded parts and/or the like for receiving e.g., an RF ID tag, phosphor tag, retroreflective tag and/or other like components that are useful as identifiers of a medium 70. In an exemplary embodiment, a unique RF ID tag is secured to a portion 74 of the medium 70, such that an RF ID antenna senses the medium within a secure environment. The tag can be secured to the casing 78 or any other part or component of the recording medium 70, such as the recording layer. Also, although an exemplary embodiment is described with respect to an RF ID tag separate from any other media indicia, an RF ID tag could be implemented as part of or in connection with other media indicia such as phosphor markers, retroreflective markers and/or the like.

In accordance with an embodiment of the present invention, device 80 can be designed with firmware whereby both standard media that do not incorporate the present invention and media in accordance with the present invention can be utilized by the device 80. In this fashion, media without confidential information and without the security features of the present invention can be written to, removed and/or exchanged freely. Thus, the present invention may supplement any security procedures that may already be in place, but is not intended to preempt the use of standard media where the use of standard media is appropriate. This may also be the basis of a multi-level security procedure, whereby standard media are of the lowest level, and media in accordance with the present invention may be assigned a higher security level.

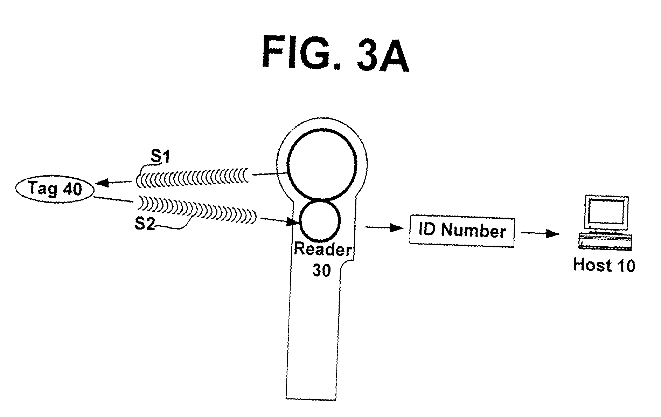

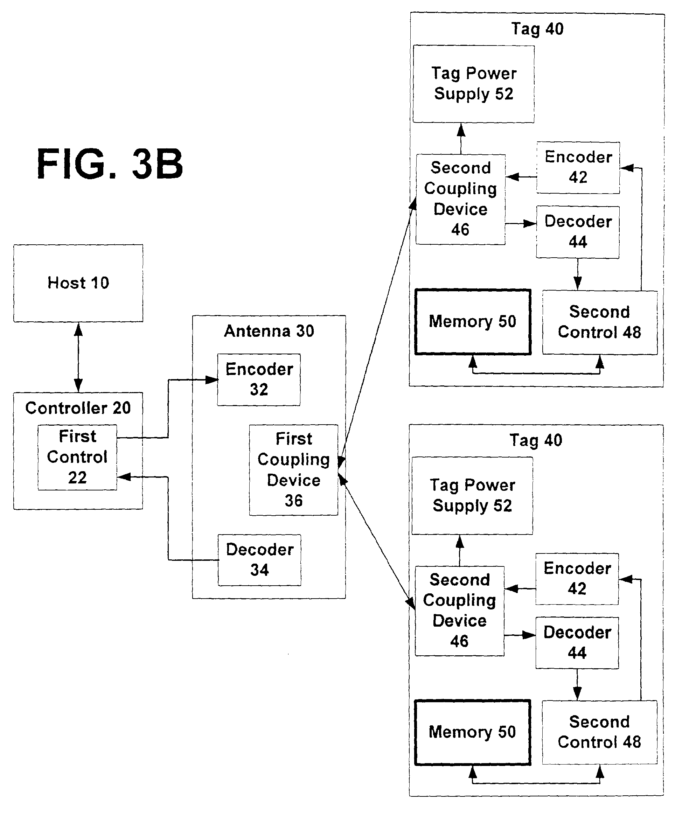

Figures 3A and 3B are block diagrams of a typical RF ID tagging system, which can be utilized in connection with a removable data storage medium 70 or other products, components or information to be tracked. With reference to Figure 3A, a reader 30 transmits a signal S1 to tag 40. Signal S1 provides power to tag 40, inter alia, and tag 40 transmits signal S2 in response to signal S1. Signal S2 can carry information or data, e.g., an ID number stored in the memory of tag 40. Once the reader 30 receives signal S2, the information carried by the signal, such as an ID number, can be communicated to a host 10 for further processing.

Figure 3B shows an RF ID system in greater detail. Antenna 30 (reader) is electrically coupled to a controller 20. The controller 20 has a first control component 22 for interfacing with an encoder 32 and a decoder 34, inter alia, of the antenna 30. Antenna 30 has a first coupling device 36, such as a first transformer component, for electrically coupling with a second coupling device 46, such as a second transformer component, of a tag 40. Electrical coupling of the first and second coupling devices enables a signal to be communicated from antenna 30 to a tag 40 or from a tag 40 to antenna 30.

An exemplary RF ID tag integrated circuit 40 that can be used in accordance with the present invention is the AT24RF08 chip produced by ATMEL®, the specification for which is obtainable from ATMEL® (the specification for the AT 24RF08 chip is hereby incorporated by reference).

Generally, a tag 40 has a power supply 52, which is powered when the second coupling device 46 is coupled to the first coupling device i.e., the electronics of tag 40 are powered by a signal produced by antenna 30. Tag 40 also has a decoder 44 and encoder 42 that communicate with a second control 48, so that data may be retrieved from or written to memory 50 of tag 40 in an appropriate data format

As shown in Figure 3B, an RF ID tagging system can support multiple tags 40. With each capable of storing different information, multiple tags are useful to identify multiple objects. When a tag 40 comes within a predetermined proximity of antenna 30 i.e., when a signal having a threshold signal strength is received by tag 40 from antenna 30, decoder 44 communicates with second control 48 with instructions regarding the data stored in memory 50. For the purposes of further description, "electrical proximity" used in connection with a tag 40 will refer to the reception by a tag 40 of an antenna signal S1 of at least a threshold signal strength capable of powering tag power supply 42. Thus, a tag 40 that is not in electrical proximity to antenna 30 is generally not powered, without an alternative source of power.

Second control 48 of tag 40 may read from the contents of memory 50 or write to the contents of memory 50. Second control 48 may also send data from memory 50 or other instructions to antenna 30 via encoder 42 and the first and second coupling devices 36, 46. With respect to a typical read operation, antenna 30 receives data stored in memory 50 of a tag 40. Controller 20 performs further processing of the data and/or communicates the data to a host 10 for further processing. Host 10, e.g., can collect, process and store information relating to all tags 40 in electrical proximity to antenna 30.

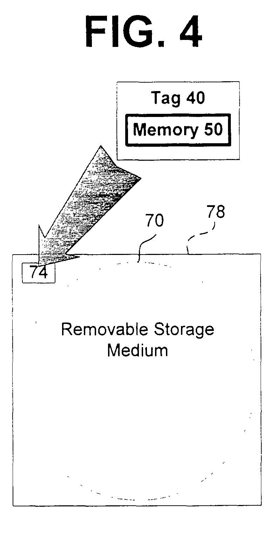

Figure 4 is an illustration of a removable data storage medium 70 having a tag 40 secured thereto in accordance with the present invention. In an exemplary embodiment, an object to be tracked or identified in accordance with the present invention may be a removable storage medium 70. Removable storage medium 70 may be encased in an outer shell 78 to protect medium 70 from damage and portion(s) 74 of outer shell 78 may be indentations, cavities, adhesive parts, molded parts and/or the like for receiving a tag 40.

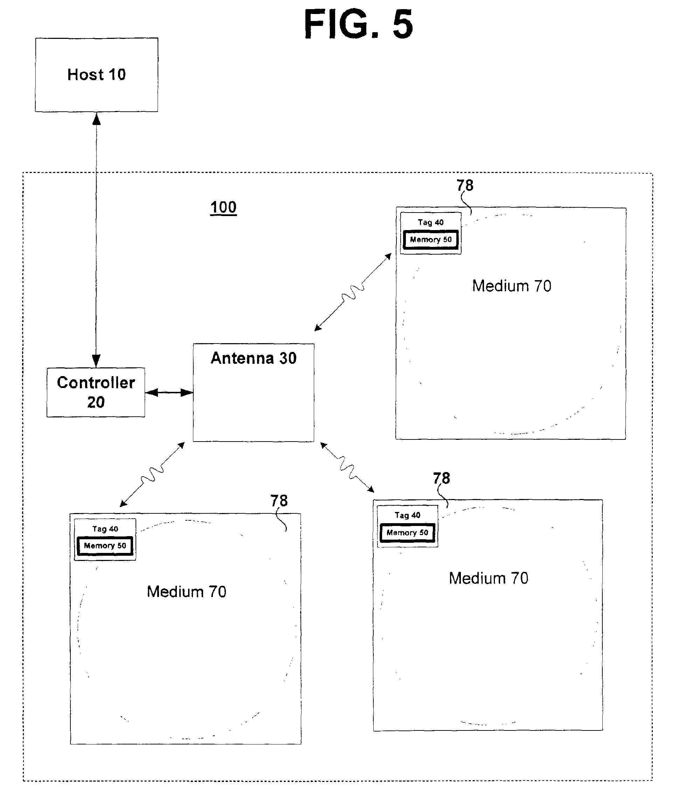

Figure 5 is a block diagram of an exemplary embodiment for tracking information relating to tags 40 secured to media 70 within a secure environment. Secure environment 100 may be any bounded region wherein increased security measures apply relative to free space. For example, secure environment 100 may be a room in which computers for an enterprise are located, or for greater security, secure environment 100 may be, e.g., a safe. In accordance with the present invention, when a medium 70 is placed inside secure environment 100, the tag 40 secured to the medium 70 becomes in electrical proximity to antenna 30 strategically located within the secure environment 100. Strategic positioning of antenna 30 includes the center of the secure environment 100, the corner of secure environment 100, or any position that is likely to satisfy signal transmission requirements of RF ID technology. Once placed in the safe, i.e., when tag 40 is in electrical proximity to antenna 30, antenna 30 (reader) reads the identification number stored in the memory 50 of the tag 40. This information can then be communicated to a host 10 or other processor for further processing, collection, display and/or storing.

Preferably, security personnel or another appropriate person with access to host 10 can view the tracking information. Host 10 can also be programmed to recognize pre-determined security parameters that are not met. For example, if a particularly high profile storage medium 70 is not in the secure environment 100 at a particular time, the host 10 can cause an alarm condition to occur. Computer readable media programmed with instructions for carrying out the above-described host monitoring of security conditions may be implemented in connection with host 10.

Additionally, in a preferred embodiment, each medium 70 is uniquely identified by unique information stored in the memory 50 of tag 40. The unique information can be the serial number of the medium 70, another number that has been recorded on the recording layer of the storage medium or another unique code such as a disk indelible utility mark (DIUM) code or phosphor marker code. Such unique information allows every object to be individually tracked.

In the case of a unique code stored on the recording layer of the storage medium 70, ordinary electronic means such as a head for reading, writing or accessing data may be used to write a unique number to the recording layer. This unique number can be reflected by a tag 40 in accordance with the present invention.

In the case of a unique phosphor marker, a latent irradiance marker (high security phosphor) is located on the object to be tracked, such as a removable storage medium. When a phosphor marker is illuminated or flooded with light, the phosphor takes a certain amount of time to release the light i.e., there is an afterglow that lasts for a measurable amount of time. This so called latent irradiance can be measured in terms of its decay time-constant. The discriminating features are the duration and form of the afterglow. In a typical use, a phosphor marker is placed on a removable storage medium to identify a special type of medium, distinguishable from other types of media. However, the marker could also be encoded with information that is unique to an individual medium 70, and this unique information can be reflected by a tag 40 in accordance with the present invention.

In the case of a DIUM code, a pattern is removed from the surface of the recording medium 70. In essence, a DIUM code serves as a microscopic bar code, and as such can be used to uniquely identify objects to be tracked, such as removable storage media 70. A DIUM code is generally created on the surface of an object by using a high energy photolithography system. A mask with desired bar pattern is imaged onto the object using an excimer laser. The energy imaged on the object's surface is of such intensity that a recording layer of the surface is 'vaporized'. This pattern is indelible. For example, a recording head of a data storage device can not alter the DIUM mark. Since the mask can be changed, the DIUM mark represents unique information. This unique information can be reflected by a tag 40 in accordance with the present invention.

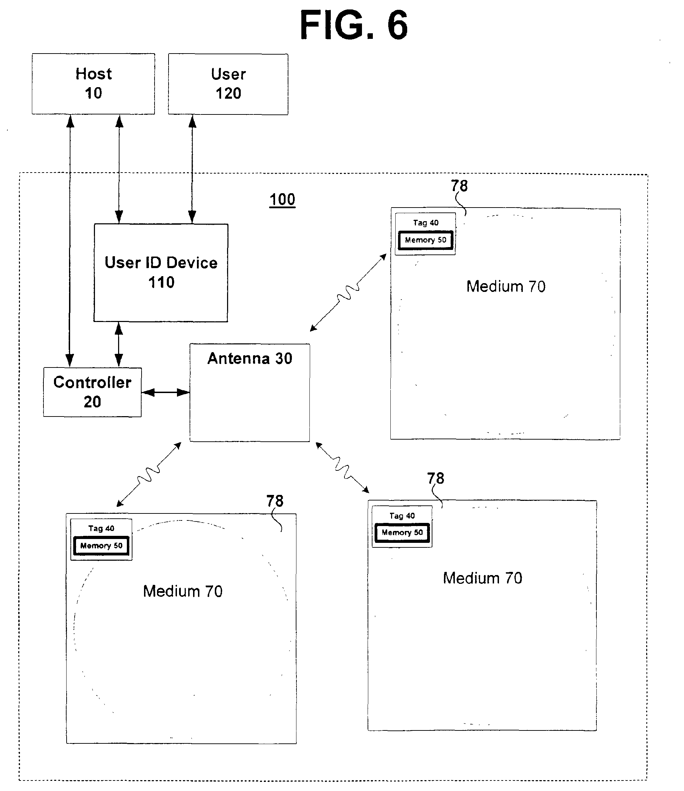

In addition, as shown in Figure 6, a user identification device 110 may optionally be implemented in accordance with the present invention. Although user ID device 110 is depicted inside secure environment 100, user ID device 110 may also be placed outside of or incorporated into secure environment 100. User ID device 110 may be any one of a variety of identification devices including, but not limited to biometric devices that read, e.g., fingerprinting information, iris information, and other unique biological conditions, and other devices such as smart cards, magnetic devices, etc.

In an exemplary implementation of user ID device 110, when a user 120 places a medium 70 inside secure environment 100, the user also presents the information requested by or appropriate to device 110 i.e., the user 120 presents his or her fingerprint, password, etc. As a result, host 10 or another processor can maintain records of who places which object in the secure environment 100 and when. In this fashion, a complete audit of the contents of secure environment 100 can be performed quickly, and security difficulties can be identified early. Thus, in accordance with the optional inclusion of user ID device 110, user ID device 110 interfaces with a user 120 and either host 10 or controller 20 for the transmission of user ID information.

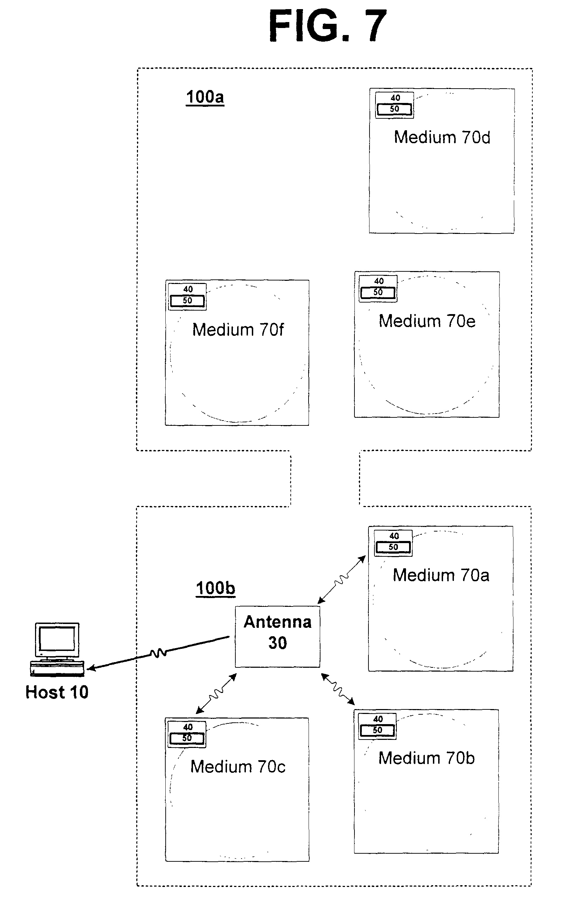

Figure 7 is a block diagram of an alternative embodiment of the present invention wherein the antenna/reader 30 is transportable as a field unit, such that an operator or other mechanical means could move the antenna 30 throughout multiple secure environments, thereby interrogating multiple environments for their separate inventory. For instance, a software company might have multiple rooms in which employees work; consequently, multiple secure environments, such as environments 100a and 100b, may each contain objects, such as media 70, to be tracked. With a knowledge of the inventory of media that should be within each or all of the secure environments, a transportable reader 30 can thus be used to determine whether any media are missing, lost or stolen.

In the present embodiment, an operator of antenna 30 moves antenna 30 through the plurality of environments while interrogating each environment for the presence of objects to be tracked. For example, an operator in environment 100b could check for media 70 in environment 100b. Upon interrogation of environment 100b, the operator would discover that media 70a, 70b and 70c were present. This information may then be communicated to host 10 or another processor for further processing, collecting, display and/or storing. The operator can manually identify environment 100b via an input device or the environment 100b could be identified automatically by the antenna 30. In this way, the contents of a room can be also be associated with the room in which the contents were found. This could be accomplished, for instance, by placing a tag 40 in the environment that identifies the area, or as described in connection with Figure 6, an ID device (an environment ID device) could be incorporated into the architecture of the system of the present invention.

After interrogating environment 100b, the operator could similarly interrogate environment 100a. In this fashion, an enterprise can maintain tracking information relating to multiple environments and their respective inventory. It can be appreciated by one of ordinary skill in the art that the present invention can also be used for authentication purposes i.e., whether or not a medium contains an RF ID tag in accordance with the present invention may be determinative of the authenticity thereof.

The present invention may also be used in connection with a network of RF ID tag readers 30 that are positioned at the exits or other portions of the periphery of the secure environment(s), so that the network of RF ID tag readers 30 can identify information about unauthorized removal of the media 70. This network of readers 30 can include an additional processor for the purpose of processing and storing this information, and where appropriate, for alerting other systems, such as a security system, about any unauthorized uses of media 70 having RF ID tags 40.

Furthermore, in accordance with the present invention, additional implementations with respect to RF ID tags 40 may be effected. For example, the process of writing an identifier to the memory of an RF ID tag 40 may be accomplished such that the memory can not be re-written. In effect, when the memory of RF ID tag 40 is read only, this removes the possibility of circumventing security procedures by changing the identification information stored in the memory 50 of the RF ID tag 40.

As afore-described, the present invention may be the basis for a multi-level security procedure wherein standard media are treated differently than media 70 produced according to the present invention. Additionally, the information stored in the memory 50 of RF ID tags 40 can by itself be used as the basis for a multilevel security procedure. For instance, a subset of information stored in the memory 50 may be unique to a security level, so that multiple security levels can be implemented within the group of media produced in accordance with the present invention. For example, a first group of media 70 with RF ID tags 40 each could have security level 'A' encoded into the information stored in the memory 50 of tags 40. A second group of media 70 with RF ID tags 40 could have security level 'B' encoded into the information stored in the memory 50 of the tags 40. A third group of media 70 without RF ID tags 40 (e.g., standard media) could be assigned a security level 'C' by default. With this example, media assigned to different security levels can be treated with different rules, depending on varying security needs.

Another feature that could be used in connection with the present invention is the implementation of a read only memory 50 in tag 40. By allowing the memory 50 to be written only once, the circumvention of the present invention by re-writing the information contained in memory 50 is avoided.

Supplementing, or as an alternative to any of the above procedures, the methods and system of the present invention may incorporate a cryptographically secure exchange procedure for secure communications between the RF ID antenna 30 and a tag 40, or additionally between host 10 and antenna 30. For example, such a procedure is used in connection with ATMEL's® secure memory integrated circuit (AT88SC153), the specification for which may be obtained from ATMEL® and is incorporated by reference. By employing a unique handshaking procedure, including pre-designed algorithms for making challenges to interrogating devices, standard access to the memory of the RF ID tag 40 by other types of readers can be denied, making the components designed in accordance with the present invention unique components for a unique system.

While the present invention has been described in connection with the preferred embodiments of the various figures, it is to be understood that other similar embodiments may be used or modifications and additions may be made to the described embodiment for performing the same function of the present invention without deviating therefrom. For example, although in a preferred embodiment, a removable data storage medium is being tracked, other implementations are contemplated by the present invention. The present invention is thus applicable to any circumstances wherein it is desirable to track information regarding objects within secure environment(s). Therefore, the present invention should not be limited to any single embodiment, but rather construed in breadth and scope in accordance with the recitation of the appended claims.

## Claims

1. A tracking system for tracking objects in a secure environment, comprising:
an RF ID antenna positioned in the secure environment;
a tagged object with an RF ID tag having a memory, said RF ID tag electrically communicating information stored in said memory to said RF ID antenna when said object is positioned in said secure environment; and
a processor for processing said information communicated to said RF ID antenna from said memory of said tagged object.

2. A tracking system according to Claim 1, wherein said tagged object is a data storage medium.

3. A tracking system according to Claim 2, wherein said secure environment is a room.

4. A tracking system according to Claim 2, wherein said secure environment is a safe.

5. A tracking system according to Claim 2, wherein said information stored in said memory of said RF ID tag is an identifier of the medium to which said RF ID tag is secured.

6. A tracking system according to Claim 5, wherein said identifier comprises a serial number of the object.

7. A tracking system according to Claim 5, wherein said identifier comprises information relating to a number stored on a recording layer of said object.

8. A tracking system according to Claim 5, wherein said identifier comprises information relating to a DIUM mark.

9. A tracking system according to Claim 5, wherein said identifier comprises information relating to a phosphor marker.

10. A tracking system according to Claim 5, wherein said identifier information stored in the memory of said RF ID tag can not be changed once said information is written to said memory.

11. A tracking system according to Claim 5, wherein said identifier information stored in the memory of said RF ID tag is read in compliance with a cryptographically secure information exchange procedure.

12. A tracking system according to Claim 1, wherein said RF ID tag is powered by a signal transmitted by said RF ID antenna.

13. A tracking system according to Claim 1, wherein said processor is a host computer.

14. A tracking system according to Claim 12, wherein said host displays said processed information.

15. A tracking system according to Claim 12, wherein said host stores said processed information.

16. A tracking system according to Claim 2, wherein a plurality of RF ID tags positioned on a plurality of medium, respectively, transmit information to said RF ID antenna.

17. A tracking system according to Claim 2, further comprising an authentication device, said authentication device producing authentication/access information that is communicated to said processor.

18. A tracking system according to Claim 17, wherein said authentication device is a smart card.

19. A tracking system according to Claim 17, wherein said authentication device is a magnetic device.

20. A tracking system according to Claim 17, wherein said authentication device is a biometric device.

21. A data storage device for reading data from and writing data to storage mediums that operates with either a standard recording medium or a recording medium as recited in connection with the system of Claim 2.

22. A tracking system according to Claim 2, wherein said secure environment comprises at least one room and said antenna is transportable such that said antenna transmits a signal to RF ID tags secured to media that are initially located remotely from said signal.

23. A tracking system according to Claim 3, further comprising a second antenna positioned to detect an unauthorized removal of a medium from said secure environment.

24. A tracking system according to Claim 23, wherein said second antenna is positioned proximate to an exit from said secure environment.

25. A method of tracking data storage media in a secure environment, comprising the acts of:
transmitting a first signal from an RF ID antenna in said secure environment;
receiving, in response to said first signal, information from the memory of an RF ID tag secured to a storage medium when said storage medium is located in said secure environment; and
processing said information to maintain a record relating to media in said secure environment.

26. A method according to Claim 25, further comprising storing said processed information.

27. A method according to Claim 25, further comprising displaying said processed information.

28. A method according to Claim 25, wherein said information in said memory of said RF ID tag is an identifier that is unique to said medium to which said RF ID tag is secured.
